# EUROPÄISCHE PATENTSCHRIFT

(11) **EP 1 004 003 B1**
(45) Veröffentlichungstag und Bekanntmachung des Hinweises auf die Patenterteilung: **07.09.2005**
(21) Anmeldenummer: 99939364.8
(22) Anmeldetag: 17.06.1999
(51) Int. Cl.: G01C 19/00, G12B 3/00, G01B 21/24

(54) **STOSSSCHUTZ FÜR LAGEMESS-SONDEN**
SHOCK PROTECTION FOR POSITION-MEASURING PROBES
PROTECTION CONTRE LES CHOCS POUR SONDES DE MESURE DE POSITION

(30) Priorität: 17.06.1998 DE 19826615
(43) Veröffentlichungstag der Anmeldung: 31.05.2000
(73) Patentinhaber: Prüftechnik Dieter Busch AG, 85737 Ismaning (DE)
(72) Erfinder: LYSEN, Heinrich, D-85748 Garching (DE); HERMANN, Michael, D-78050 Villingen (DE)
(86) Internationale Anmeldenummer: PCT/DE1999/001786
(87) Internationale Veröffentlichungsnummer: WO 1999/066287

(56) Entgegenhaltungen:
- DE-A- 19 546 405
- GB-A- 2 271 422
- PATENT ABSTRACTS OF JAPAN vol. 017, no. 059 (M-1363), 5. Februar 1993 (1993-02-05) & JP 04 269154 A (OKUMA MACH WORKS LTD), 25. September 1992 (1992-09-25)

## Beschreibung

Die vorliegende Erfindung bezieht sich auf eine Stoß-Schutz-Vorrichtung für Lagemess-Sonden oder Gyroskope, insbesondere solchen, die mit einem optischen Kreiselsystem oder mit einem mechanischen Oszillator ausgerüstet sind. Darüberhinaus kann die Erfindung nutzbringend als Stoß-Schutz für Präzisions-Instrumente verwendet werden, die eine gewisse Stossempfindlichkeit aufweisen.

### [Stand der Technik]

Ein Stoss-Schutz-System für Lagemess-Sonden der genannten Art, insbesondere wie in der DE 19800534.2 oder der DE 19546405.2 beschrieben, ist nicht bekannt. Die dem Fachmann geläufigen Vorrichtungen, um Chronometer oder elektrische Präzisionsinstrumente wie z.B. Galvanometer gegen Stoss zu schützen, können in diesem Zusammenhang nicht angewendet werden.

JP-A-04 269 154 beschreibt ein Messinstrument mit einem Fühler. In einer ersten Phase, bei der keine Messungen stattfinden und der Fühler vor externen Kräften und Vibrationen geschützt werden soll, wird der Fühler mittels Druckluft in eine bestimmte Position im Messinstrumentgehäuse gebracht. Zur Messung wird die Druckluftzufuhr gestopt, so dass der Fühler zur Aufnahme der Messwerte beweglich ist.

### [Aufgabe der Erfindung]

Das der Erfindung zugrundeliegende Problem besteht in folgendem: Bei der Verwendung von Lagemess-Sonden der genannten Art müssen diese vor übermässigen Stössen oder Beschleunigungen geschützt werden. Dies beruht insbesondere auf der Empfindlichkeit der verwendeten Bauelemente gegen solche Stösse. Ein versehentliches Fallenlassen solcher Instrumente kann daher erhebliche Reparaturkosten verursachen. Andererseits müssen die genannten Lagemess-Sonden definiert, d.h. mechanisch präzise, ohne Lose oder schädliche Nachgiebigkeit an eine zu vermessende Oberfläche angelegt werden. Diese Aspekte stehen in gewissem Gegensatz zueinander, da es nicht möglich ist, eine herkömmliche Polsterung an die hier diskutierten Sonden anzubringen, ohne deren Messgenauigkeit in Mitleidenschaft zu ziehen.

Gemäss der Erfindung wird das vorliegende Problem wird dadurch gelöst, dass ein Stoss-Schutz für Lagemess-Sonden vorgesehen wird, welcher anlässlich eines durchzuführenden Messvorganges kurzfristig deaktiviert wird, oder nur in anteiligem Maße zur Verfugung gestellt wird.

In einer ersten Ausführungsform besteht die Erfindung aus einem Stoss-Schutz für Lagemess-Sonden mit einer äusseren Schale, welche an eine auszumessende Fläche anlegbar ist, mindestens einer innere Schale, welche eine oder mehrere Lagemess-Sonden umschliesst, und Mitteln, mit welchen die innere Schale manuell oder mittels einer elektromechanischen Vorrichtung in definierten mechanischen Kontakt mit der äusseren Schale bringbar ist, wobei die innere Schale in Bezug zur äusseren Schale während einer zeitlichen Phase, bei der stossschützende Funktionen priorisiert werden, durch ein oder mehrere Polster- oder stossdämpfende Elemente beabstandet ist und während einer Phase zur Erfassung von Messwerten in formschlüssigem mechanischem Kontakt steht.

In einer zweiten Ausführungsform besteht die Erfindung aus einem Stoss-Schutz für Lagemess-Sonden mit einer äusseren Schale und einer inneren Schale, welche eine oder mehrere Lagemess-Sonden umschliesst, und Mitteln, mit welchen die innere Schale manuell oder mittels einer elektromechanischen Vorrichtung durch eine in der äusseren Schale vorgesehenen Öffnung zur Erfassung von Messwerten in formschlüssigen mechanischen Kontakt mit der auszumesenden Fläche bringbar ist, wobei die innere Schale in Bezug zur äusseren Schale während einer zeitlichen Phase, bei der stossschützende Funktionen priorisiert werden, durch ein oder mehrere Polster- oder stossdämpfende Elemente beabstandet ist.

Gemäss der Erfindung ist es nunmehr möglich, Lagemess-Sonden und Gyroskope auf Basis optischer Kreisel, speziell faseroptischer Kreisel, und solchen mit einem oder mehreren mechanischen Schwingern (Oszillatoren), vor Stössen beim Transport, bei der Bedienung und auch beim Ansetzen an eine zu vermessende Fläche zu schützen. Solche Flächen können speziell die zylindrischen Oberflächen von Walzen sein, wie sie bei der Herstellung von Filmen, Folien, Blechen und Papiermaterialien verwendet werden, und die eine hochgenaue Parallelität aufweisen müssen. Die Erfindung eignet sich daher besonders dazu, eine sehr genaue Messung der Parallelität von solchen Walzen durchzuführen, ohne dass ein grosses Risiko existiert, die verwendete relativ kostenintensive Messapparatur versehentlich durch fehlerhaftes Ablegen, Aufsetzen, oder durch Fallenlassen, zu beschädigen.

Die Erfindung beruht gemäss der ersten grundlegenden Ausführungsform darauf, dass anstelle eines einzigen Gehäuses für entsprechende Vorrichtungen nunmehr ein solches vorgesehen wird, welches eine innere und eine äussere Schale aufweist. Beide Schalen sind im inaktiven Zustand der Sonde durch eine spezielle Polsterung voneinander beabstandet. Ein innerhalb der inneren Gehäuse-Schale befindliches Mess-System wird somit elastisch gegen Stösse geschützt. Erst kurz vor einer Bestimmung eines Messwertes, und erst nachdem die Mess-Sonde in eine interessierende Messposition gebracht worden ist, wird mittels einer elektrisch betriebenen Vorrichtung dafür gesorgt, dass innere und äussere Schale in einen hochgenau definierten mechanischen Kontakt miteinander gebracht werden. Unmittelbar nach Messwertnahme wird dafür gesorgt, dass der mechanische Kontakt zwischen beiden Schalen wieder gelöst wird. Anstelle der elektrisch betriebenen Vorrichtung, welche die mechanische Kontaktgabe herbeiführt, kann auch eine ähnlich wirkende manuell zu betätigende Einrichtung vorgesehen sein, welche konstruktiv einfacher ausgestaltet sein kann.- Für vergleichbare Aufgabenstellungen, welche relativ grosse Gehäuse erfordern, kann auch eine druckluftbetriebene Einrichtung vorgesehen werden. Eine typischer Ablauf bei einem Messvorgang besteht also darin, dass die Mess-Sonde an eine zu vermessende Fläche angelegt wird, dann das Betätigen eines Auslösers oder Schalters mittels der elektrisch betriebenen Vorrichtung eine präzise mechanische Kontaktgabe zwischen beiden Schalen erzeugt, sodann durch eine (bevorzugt in der inneren der beiden Schalen befindliche) Elektronik die interessierenden Positions-und/oder Winkel-Werte sensiert und elektronisch ausgewertet werden, danach durch die elektrisch betriebene Vorrichtung der mechanische Kontakt zwischen beiden Schalen wieder gelöst wird. Nach diesen Schritten erfolgt die weitere Verwendung und Auswertung der erhaltenen Messwerte.
Gemäss der Erfindung geschieht die mechanische Kontaktgabe zwischen innerer und äusserer Schale bevorzugt mittels einer kontaktierenden Bewegung in Richtung einer der Raumdiagonalen dieser Schalen, so dass die Peripherie der inneren Schale mit mindestens drei Auflagepunkten auf der Innenseite der äusseren Schale kontaktierbar ist. Die äussere Schale wirkt auf diese Weise gewissermassen als mechanisches Führungsprisma für die innere Schale.
Gemäss der Erfindung ist es möglich, beliebige elastische Materialien zur Polsterung zum Zwecke einer Stossdämpfung der genannten inneren Schale gegenüber der äusseren Schale vorzusehen. Von Vorteil ist es jedoch, aufgeschäumte Silikon-Werkstoffe als Polsterung vorzusehen, da diese nicht nur über einen grossen Temperaturbereich einsetzbar und praktisch unbrennbar sind, sondern auch keinen besonders ausgeprägten Temperaturgang ihrer elastischen Eigenschaften aufweisen.

### [Beispiele]

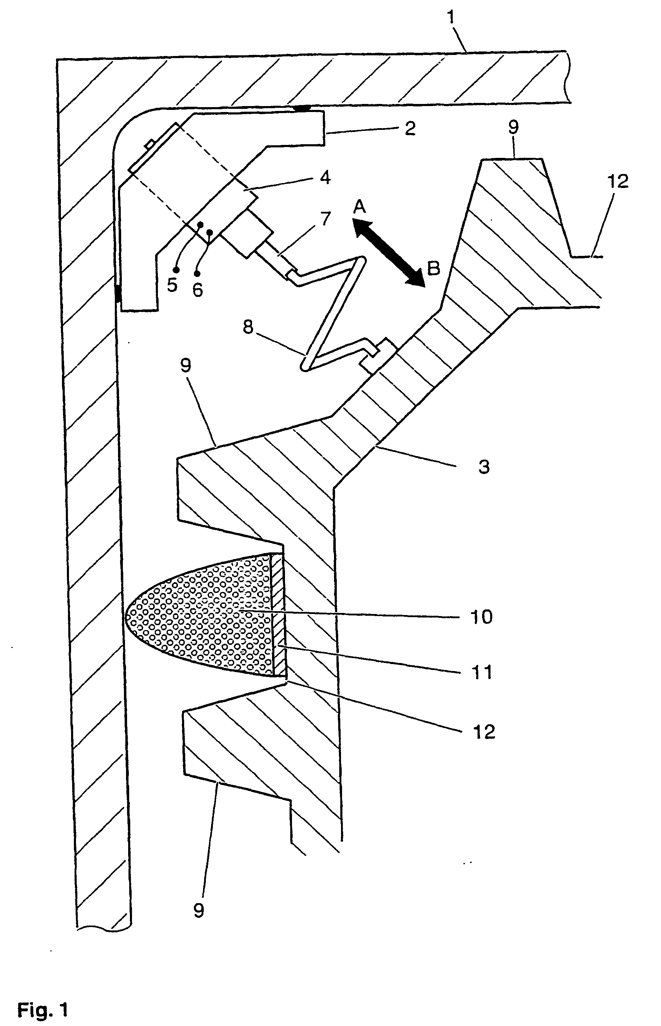

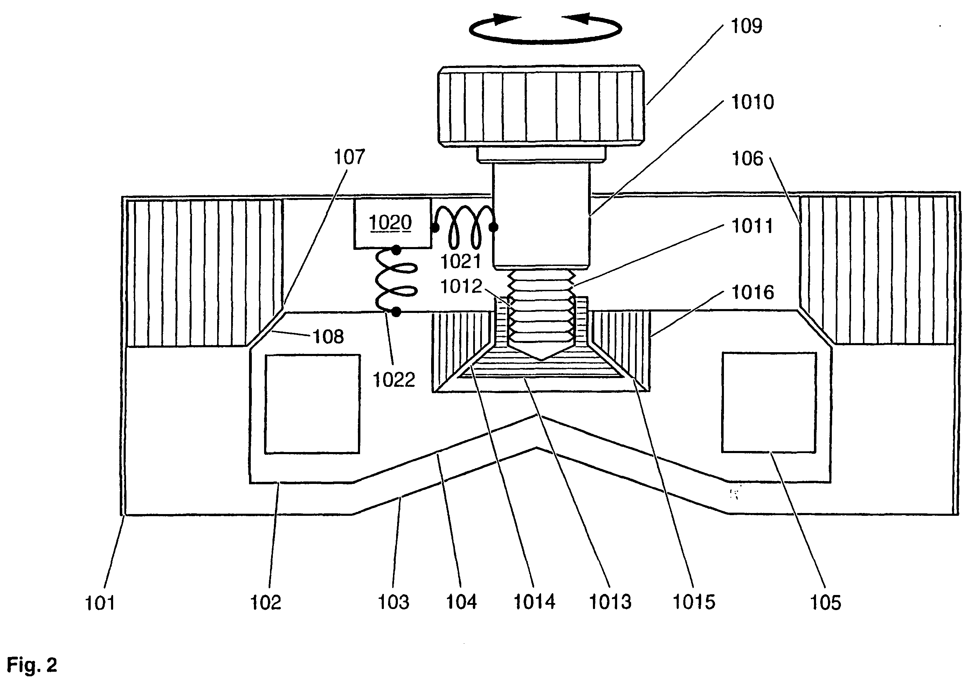

Die Erfindung wird im folgenden anhand der bevorzugten Ausführungsbeispiele gemäss Fig. 1 und 2 beschrieben. - Es zeigt
Fig. 1 das zugrundeliegende Prinzip einer ersten grundlegenden Ausführungsform für eine zweidimensional wirkende Vorrichtung
Fig. 2 das zugrundeliegende Prinzip einer zweiten grundlegenden Ausführungsform.

Wiewohl die in Fig. 1 gezeigte Anordnung einen Stosschutz in zwei Richtungen erkennen lässt, kann sie ohne weiteres dazu herangezogen werden, eine entsprechend dreidimensional wirkende Vorrichtung zu erstellen. Fig. 1 zeigt als Ausschnittsdarstellung den mit einer elektromechanischen Vorrichtung ausgestatteten Zwischenraum zwischen den genannten Schalen. Auf eine Darstellung derjenigen Ecken oder Kanten der Lagemess-Sonde, welche nicht zu einer mechanischen Kontaktgabe zwischen den genannten Schalen herangezogen werden, wird verzichtet.- Im Einzelnen wird durch Bezugsziffer 1 eine äussere Schale des erfindungsgemässen Gehäuses für eine Lagemess-Sonde oder für ein Präzisionsinstrument bezeichnet, während eine zugehörige innere Schale durch Bezugsziffer 3 ausgewiesen ist. Beide Schalen 1 und 3 sind, falls sie nicht miteinander in direktem mechanischen Kontakt stehen, durch ein, bevorzugt mehrere elastische Polsterelemente 10 voneinander gegenseitig und mit einer vorgegebenen Elastizität beabstandet. Sie schützen somit eine in der inneren Schale 3 befindliche Anordnung, speziell ein Gyroskop, vor mechanischem Stoss. Ein Polsterelement 10 besteht bevorzugt aus einem Schaumstoff- oder einem Elastomer-Material. Bevorzugt weist es einen etwa halbkreisförmigen Querschnitt auf und ist mittels einer hitzebeständigen Klebstoff-Schicht 11 an der inneren Schale 3 fixiert. Zur Erzielung eines ausreichenden Federweges für das Polsterelement 10 wird dieses bevorzugt in Vertiefungen 12 eingesetzt, welche in die innere Schale 3 eingearbeitet sind und somit lokale Vorsprünge 9 definieren, welche als Anlegeflächen zur mechanischen Kontaktgabe dienen. Eine Relativbewegung der Innenschale 3 in Richtung der äusseren Schale 1 kann also nur gegen eine Federkraft erfolgen. Je nachdem, ob der verwendete elastische Werkstoff des Polsterelementes 10 als eher offenporig oder eher massiv spezifiziert wird, sind dessen Dämpfungseigenschaften veränderbar.
Die elastische Verbindung zwischen innerer Schale 3 und äusserer Schale 1 kann kurzfristig dadurch aufgehoben werden, dass die in einer Ecke des Aussengehäuse 1 befindliche elektromechanische Vorrichtung 4 (mit Anschlusskontakten 5 und 6) aktiviert wird. Die elektromechanische Vorrichtung 4 ist z.B. mittels eines Haltebügels 2 an der äusseren Schale fixiert ist und bevorzugt als kleinvolumiger DC-Linearmotor ausgestaltet. Dessen Schubstange 7 kann das Innengehäuse 3 mittels eines Federelementes 8 in Richtung der Pfeilspitzen A oder B entweder ziehen oder schieben, je nach Art seiner Stromversorgung. Wird das innere Gehäuse 3 also in Richtung der Pfeilspitze A gezogen, so führt dies dazu, dass die Vorsprünge 9 nacheinander (eventuell gleichzeitig) an die Innenflächen des Aussenschale 1 angelegt werden. Hierdurch stehen die Schalen 1 und 3 in exakt definierter Lage zueinander, und die räumliche Position und Orientierung der Aussenschale 1 wird auf die der Innenschale 3 übertragen. In dieser Phase, welche gewöhnlich mit einer Mess-Phase übereinstimmt, entfällt die stossmildernde Wirkung der Polsterelemente 10, und auch die des elastischen Elementes 8. Nach Beendigung eines Messvorganges wird die Innenschale 3 durch die elektromechanische Vorrichtung 4 wieder zurückgeschoben. Die Polsterelemente 10 übernehmen damit wieder die beabstandende und stossmindernde Funktion zwischen äusserer und innerer Schale.
Sollen Innen- und Aussenschale in allen drei Koordinaten des Raumes miteinander in Kontakt bringbar sein, so ist es von Vorteil, die Zug/Schub-Richtung der elektromechanischen Vorrichtung 4 etwa in Richtung der entsprechenden Raumdiagonalen einer Schale vorzusehen. Auf diese Weise gelingt es, eine exakt definierte Relativlage zwischen Innenschale 3 und Aussenschale 9 herbeizuführen.

Gemäss Fig. 2, welche eine andere erfindungsgemässe Vorrichtung in einer Querschnittsansicht zeigt, wird eine zweite Lösung des obengenannten Problems bereitgestellt:
Innerhalb einer als Schutz vor mechanischen Einwirkungen dienenden äusseren Schale 101 befindet sich ein Instrumententräger 102, welcher ein stossempfindliches Messinstrument, z.B. ein Kreiselsystem 105 (schematisch gezeichnet) aufnimmt oder trägt. Das Kreiselsystem kann auch aus mehreren, orthogonal zueinander ausgerichteten Kreiseln bestehen. - Die äussere Schale 101 ist fast allseits geschlossen, weist jedoch an der Bodenfläche und den Seitenflächen eine Öffnung in Form einer Ausnehmung 103 auf (Öffnung der Bodenfläche nicht näher ausgewiesen). Die Ausnehmung 103 ermöglicht es, dass der mit einer prismatischen Auflegefläche 104 versehene Instrumententräger bei Bedarf in direkten und hochgenauen mechanischen Kontakt mit einer unter der Ausnehmung 103 befindlichen zylindrischen Walze oder einem anderen auszumessenden Gegenstand gebracht werden kann. Die in der Figur gezeigte Positionierung des Instrumententrägers 102 stellt jedoch einen ersten Betriebszustand der erfindungsgemässen Vorrichtung dar, bei der durch stossabsorbierende Elemente, wie z.B. Schaumstoffpolster 106, vor von aussen einwirkenden Stössen geschützt ist. Um aus dieser Position in mechanischen Kontakt mit einer darunter befindlichen zylindrischen Walze gebracht zu werden, ist es erforderlich, dass der Instrumententräger 102 abgesenkt wird. Zu diesem Zweck wird eine manuell oder motorisch betriebene Vorrichtung vorgesehen, welche wie gezeigt z.B. aus einer Schraube 1011 und einem mit einer Gewindebohrung 1012 versehenen Koppelteller 1013 besteht. Schraube 1011 kann per Drehknopf 109 und/oder elektromotorischem Antrieb (per Motor 1010) rechts- oder linksläufig gedreht werden, so dass eine variierbare Beabstandung des Koppeltellers 1013 relativ zu Unter- und Oberseite der äusseren Schale 101 durchführbar ist. Koppelteller 1013 weist bevorzugt eine Kegelfläche 1014 auf, so dass der Instrumententräger 102 mittels eines im wesentlichen fest mit diesem verbundenen stossabsorbierenden Element in Form eines Schaumstoffpolsters 1016 und dessen Kegelfläche 1015 anhebbar oder absenkbar ist. Bei angezogener Schraube 1011 wird also der Instrumententräger 102 in eine gepolsterte Ruheposition gebracht, in der er vermittels der kombinierten Stosschutzwirkung der Schaumstoffpolster 106 und 1016 hinreichend vor schädigenden Beschleunigungen geschützt ist. Wie gezeigt, liegt in dieser Position eine z.B. abgeschrägte Anlegefläche 108 des Instrumententrägers direkt an einer abgeschrägten Kante 107 des Schaumstoffpolsters 106, so dass eine Stosschutzwirkung nach mindestens zwei Richtungen des Raumes bewirkt wird.
Mittels einer Anschlussleitung 1021 kann der Motor 1010 von einer schematisch dargestellten Kombination 1020 bestehend aus einer Energieversorgung und einem Mess- und Steuercomputer betätigt werden. Diese Kombination 1020 steht drahtlos oder ebenfalls mittels eines Verbindungskabels 1022 mit den Instrumenten in Verbindung, zwecks einer Bestromung und/oder Übertragung von Mess- oder Steuergrössen.
Wiewohl in der Zeichnung nicht gezeigt, ist es erkennbar, dass nach im wesentlichen linear durchgeführter Absenkung des Instrumententrägers 102 mittels Schraube 1011, Gewindebohrung 1012 und Koppelteller 1013 bei Kontaktierung mit einem (nicht gezeigten) zu vermessenden Objekt der vollständige Schutz von Instrumenten wie z.B. einem Kreiselsystem 105, insbesondere einem Laserkreiselsystem, gegen von aussen einwirkende Stösse aufgehoben ist. Gemäss der Erfindung ist es möglich, mittels der stossschützenden Vorrichtung oder Puffer einen Federweg von 5 bis 25 mm für die Relativbewegung zwischen Kreisel-Gehäuse und Schutzgehäuse bereitzustellen. - Das Schutzgehäuse kann zusätzlich mit einer Interface-Elektronik, einem Tastenfeld oder einer Anzeigevorrichtung/Display ausgestattet sein. - Auf dem Instrumententräger 102 kann zusätzlich zu oder anstelle eines Kreiselsystems 105 ein visuell oder elektronisch ablesbares Inclinometer vorgesehen werden.

Die Kontaktierung des Instrumententrägers mit einem zu vermessenden Objekt kann darüberhinaus dadurch stossgemindert werden, dass zusätzliche Federelemente im Instrumententräger vorgesehen sind, welche jedoch bei vollständiger Kontaktierung in vorgesehene Bohrungen oder Ausnehmungen zurückgedrückt sind und den eigentlichen Messvorgang dann nicht mehr beeinflussen.

Der im vorhergehenden beschriebene Stoss-Schutz findet bevorzugte Verwendung bei der industriellen Anwendung von Laser-Kreiseln oder -Gyroskopen im Zusammenhang mit der Überprüfung der Parallelität von Walzen-Anordnungen, die bei der Herstellung von Filmen, Folien, Blechen oder Papiermaterial eingesetzt werden.

## Patentansprüche

1. Stoss-Schutz für Lagemess-Sonden mit einer äusseren Schale (1), welche an eine auszumessende Fläche anlegbar ist, mindestens einer innere Schale (3), welche eine oder mehrere Lagemess-Sonden umschliesst, und Mitteln, mit welchen die innere Schale (3) manuell oder mittels einer elektromechanischen Vorrichtung (4) in definierten mechanischen Kontakt mit der äusseren Schale (1) bringbar ist, wobei die innere Schale (3) in Bezug zur äusseren Schale (1) während einer zeitlichen Phase, bei der stossschützende Funktionen priorisiert werden, durch ein oder mehrere Polster- oder stossdämpfende Elemente (10) beabstandet ist und während einer Phase zur Erfassung von Messwerten in formschlüssigem mechanischem Kontakt steht.

2. Stoss-Schutz für Lagemess-Sonden mit einer äusseren Schale (101) und einer inneren Schale (102), welche eine oder mehrere Lagemess-Sonden (105) umschliesst, und Mitteln, mit welchen die innere Schale (102) manuell oder mittels einer elektromechanischen Vorrichtung (109, 1010) durch eine in der äusseren Schale (102) vorgesehenen Öffnung (103) zur Erfassung von Messwerten in formschlüssigen mechanischen Kontakt mit der auszumesenden Fläche bringbar ist, wobei die innere Schale (102) in Bezug zur äusseren Schale (101) während einer zeitlichen Phase, bei der stossschützende Funktionen priorisiert werden, durch ein oder mehrere Polster- oder stossdämpfende Elemente (106, 1016) beabstandet ist.

3. Stoss-Schutz für Lagemess-Sonden gemäss Anspruch 2, wobei die innere Schale (102) mittels einer mechanischen Verstelleinrichtung (109) innerhalb der äusseren Schale (101) relativ zu dieser und relativ zu der auszumessenden Fläche bewegbar ist.

4. Stoss-Schutz für Lagemess-Sonden gemäss Anspruch 3, wobei die innere Schale (102) mittels einer als Schraube (1011) und Gewindebohrung (1012) ausgelegten mechanischen Führung relativ zur äusseren Schale (101 bewegbar ist.

5. Stoss-Schutz für Lagemess-Sonden gemäss Anspruch 4, wobei die Schraube (1011) manuell oder mittels eines Elektromotors (1010) in beliebige Richtung drehbar ist.

6. Stoss-Schutz für Lagemess-Sonden gemäss einem der vorangehenden Ansprüche, wobei die Lagemess-Sonden (105) Kreiselsysteme sind.

7. Stoss-Schutz für Lagemess-Sonden gemäss einem der vorangehenden Ansprüche mit einer Betriebs- und Auswerte-Elektronik (1020) und nach aussen führenden elektrischen Verbindungsleitungen zur Stromversorgung und zur Übertragung von Steuer- und Mess-Signalen.

8. Stoss-Schutz für Lagemess-Sonden gemäss einem der vorangehenden Ansprüche, wobei auf oder in der äusseren Schale (1; 101) eine Interface-Elektronik, ein Tastenfeld oder eine Anzeigevorrichtung / Display angeordnet ist.

## Claims

1. Shock protection for position measuring probes having an outer shell (1) which can be applied to a surface to be measured, at least one inner shell (3) which surrounds one or more position measuring probes, and means with the aid of which the inner shell (3) can be brought into defined mechanical contact with the outer shell (1) manually or by means of an electromechanical device (4), in which the inner shell (3) is spaced apart from the outer shell (1) by one or more cushioning or shock-absorbing elements (10) during a temporal phase in which shock protection functions are prioritized, and is in form-fitting mechanical contact during a phase for the purpose of recording measured values.

2. Shock protection for position measuring probes having an outer shell (101) and an inner shell (102) which surrounds one or more position measuring probes (105), and means with the aid of which the inner shell (102) can be brought into form-fitting mechanical contact with the surface to be measured manually or by means of an electromechanical device (109, 1010) through an opening (103) provided in the outer shell (102) for the purpose of recording measured values, in which the inner shell (102) is spaced apart from the outer shell (101) by one or more cushioning or shock-absorbing elements (106, 1016) during a temporal phase in which shock protection functions are prioritized.

3. Shock protection for position measuring probes according to Claim 2, wherein the inner shell (102) can be moved relative to the outer shell (101) and relative to the surface to be measured by means of a mechanical adjusting device (109) inside the outer shell (101).

4. Shock protection for position measuring probes according to Claim 3, wherein the inner shell (102) can be moved relative to the outer shell (101) by means of a mechanical guide designed as a screw (1011) and threaded bore (1012).

5. Shock protection for position measuring probes according to Claim 4, wherein the screw (1011) can be turned in any desired direction manually or by means of an electric motor (1010).

6. Shock protection for position measuring probes according to one of the preceding claims, in which the position measuring probes (105) are gyroscopic systems.

7. Shock protection for position measuring probes according to one of the preceding claims, having an operating and evaluating electronic system (1020) and outwardly leading electric connecting lines for the power supply and for transmitting control and measurement signals.

8. Shock protection for position measuring probes according to one of the preceding claims, in which an electronic interface system, a keyboard or an indicating device/display is arranged on or in the outer shell (1; 101).

## Revendications

1. Protection antichoc pour les sondes de mesure de position comprenant une coque externe (1) qui peut être appliquée sur la surface à mesurer, au moins une coque interne (3) qui entoure une ou plusieurs sondes de mesure de position et des moyens avec lesquels la coque interne (3) peut être amenée, manuellement ou au moyen d'un dispositif électromécanique (4), dans un contact mécanique défini avec la coque externe (1), la coque interne (3) étant écartée de la coque externe (1), pendant une phase temporelle lors de laquelle la priorité est accordée aux fonctions de protection antichoc, par un ou plusieurs éléments de rembourrage ou d'amortissement des chocs (10), et étant en contact mécanique par engagement géométrique pendant une phase d'acquisition des valeurs mesurées.

2. Protection antichoc pour les sondes de mesure de position comprenant une coque externe (101) et une coque interne (102), laquelle entoure une ou plusieurs sondes de mesure de position (105), et des moyens avec lesquels la coque interne (102) peut être amenée, manuellement ou au moyen d'un dispositif électromécanique (109, 1010) à travers une ouverture (103) prévue dans la coque externe (102), dans un contact mécanique défini avec la surface à mesurer en vue de l'acquisition des valeurs mesurées, la coque interne (102) étant écartée de la coque externe (101), pendant une phase temporelle lors de laquelle la priorité est accordée aux fonctions de protection antichoc, par un ou plusieurs éléments de rembourrage ou d'amortissement des chocs (106, 1016).

3. Protection antichoc pour les sondes de mesure de position selon la revendication 2, la coque interne (102) pouvant être déplacée au moyen d'un dispositif de positionnement mécanique (109) à l'intérieur de la coque externe (101) par rapport à celle-ci et par rapport à la surface à mesurer.

4. Protection antichoc pour les sondes de mesure de position selon la revendication 3, la coque interne (102) pouvant être déplacée par rapport à la coque externe (101) au moyen d'un guide mécanique réalisé sous la forme d'une vis (1011) et d'un trou taraudé (1012).

5. Protection antichoc pour les sondes de mesure de position selon la revendication 4, la vis (1011) pouvant être tournée dans un sens quelconque manuellement ou au moyen d'un moteur électrique (1010).

6. Protection antichoc pour les sondes de mesure de position selon l'une des revendications précédentes, les sondes de mesure de position (105) étant des systèmes gyroscopiques.

7. Protection antichoc pour les sondes de mesure de position selon l'une des revendications précédentes, comprenant un circuit électronique de fonctionnement et d'analyse (1020) et des lignes de connexion électriques menant vers l'extérieur pour l'alimentation électrique et pour la transmission de signaux de commande et de mesure.

8. Protection antichoc pour les sondes de mesure de position selon l'une des revendications précédentes, un circuit électronique d'interface, un clavier ou un dispositif d'affichage / écran étant disposé sur ou dans la coque externe (1 ; 101).
